# EUROPEAN PATENT SPECIFICATION

(11) **EP 0 608 032 B1**
(45) Date of publication and mention of the grant of the patent: **04.09.1996**
(21) Application number: 94200116.5
(22) Date of filing: 18.01.1994
(51) Int. Cl.: A01K 1/10, A01K 5/02

(54) **Feeding device**
Futtereinrichtung
Dispositif d'alimentation

(30) Priority: 18.01.1993 NL 9300092; 11.03.1993 NL 9300444
(43) Date of publication of application: 27.07.1994
(73) Proprietor: DE BOER STALINRICHTINGEN B.V., NL-8938 AD Leeuwarden (NL)
(72) Inventor: Akkerman, Tjerk, Ir., NL-9244 Beetsterzwaar (NL); Wildschut, Gerben, Ing., NL-8915 DM Leeuwarden (NL)
(74) Representative: 't Jong, Bastiaan Jacobus

(56) References cited:
- EP-A- 0 043 098
- DE-U- 8 016 891
- US-A- 3 789 976
- PATENT ABSTRACTS OF JAPAN vol. 8, no. 5 (M-267)11 January 1984 & JP-A-58 167 312 (CHIYUUGAI RO KOGYO KK) 3 October 1983

## Description

The invention relates to a feeding device for cattle as indicated in the introductory part of claim 1.

A feeding device of this kind is known from DE-U-8 016 891. In this known device the cable parts of the drive means are part of one cable running from one end of the pathway to the other. The cable engages the slide by running over rollers connected to the slide. In practice, the device shown in this document cannot operate satisfactorily.

The invention has for its object to provide a feeding device of the kind described above, which can operate in a satisfactory way while having a relatively simple construction.

This object is achieved with the feeding device of the invention, as characterized in claim 1. By having the fixed support points mounted close to the feeding fence, the passage for, for instance, the tractor with which the fodder blocks are positioned on the positioning surface, is not hindered by these support points, when supplying the fodder blocks.

A further advantageous feature is characterized in claim 2. The required driving force is determined by the friction of the compacted fodder blocks on the positioning surface. The friction of the fodder slide itself is much less, so that a fully satisfactory operation is obtained even if the friction of the slide is not reduced by wheels.

Further advantageous features appear from the subclaims.

The invention will be further elucidated in the following description with reference to the annexed figure.

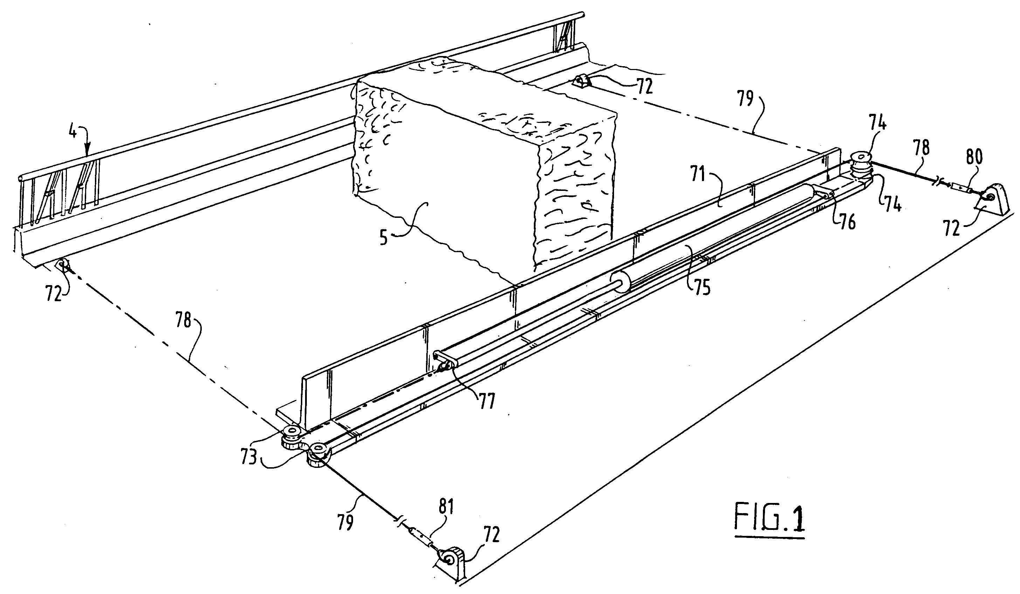

- Figure 1: shows a feeding device according to a preferred embodiment of the invention.

Figure 1 shows a part of an interior of an animal stall with a feeding fence 4 along which a pathway extends. The feeding fence 4 has several openings for passage of the head of an animal. A positioning surface for compacted fodder blocks 5, such as silage blocks, is situated close to the feeding fence 4. According to the invention the positioning surface is formed by the surface of the pathway, which is an uninterrupted continuous surface. The feeding device 70 further comprises a fodder slide 71 which can be displaced toward and away from the feeding fence 4 by a cable drive means.

In the movement toward the feeding fence 4, the fodder blocks 5 are carried along by the fodder slide and brought within reach of the cattle. When the fodder 5 is finished, the fodder slide 71 is moved back again so that new fodder blocks 5 can be placed on the positioning surface.

The feeding device is simply installed upon the continuous surface of the pathway.

The cable drive means of the feeding device 70 comprises cables 78, 79 and a hydraulic jack 75.

The cable 78 is fastened to a fixed support point 72 close to feeding fence 4. The cable 78 runs therefrom over a guide wheel 73 mounted rotatably on slide 71. The cable 78 subsequently extends parallel to slide 71 to the other end thereof where it is trained round a second guide wheel 74. From guide wheel 74 the cable 78 extends to a support point 72 remote from feeding fence 4. Cable 79 extends along a similar S-path from a support point 72 close to feeding fence 4, over a guide wheel 73, along the slide 71, over a guide wheel 73 to a support point 72 at a distance from feeding fence 4. Guide wheels 73 are placed mutually adjacent and guide wheels 74 are placed one above the other. The ends of the cables 78, 79 which are remote from feeding fence 4 are fastened to the support points 72 using the respective cable tensioners 80, 81. Using the tensioners 80, 81 the cables 78, 79 can be brought to a desired tension and the slide 71 can moreover be set properly parallel to feeding fence 4.

Due to the described path of cables 78, 79 the slide 71 can now only move parallel to itself, i.e. maintain its orientation, in the direction toward and away from feeding fence 4. The drive of this movement is obtained, as noted, using a hydraulic jack 75. The piston rod of this jack 75 grips at 77 onto the cable 78 and at 76 the cylinder of jack 75 grips onto cable 79.

By retracting the piston 75, which is double-action, in the drawn embodiment of the device 70, the portions of the cables 78, 79 situated between the slide 71 and the support points 72 close to the feeding fence 4 are tightened simultaneously, while the opposite portions of cables 78, 79 are slackened. The fodder slide 71 hereby slides toward the feeding fence 4. The return movement is of course achieved by extending the jack 75.

A stop engaging on the opposite end of fodder block 5 can be connected to the fodder slide 71, for instance by means of ratchet mechanisms which remain out of engagement during a movement of the slide 71 toward fence 4 and come into engagement during an opposing movement. The fodder slide 71 can thus slide the fodder block 5 to the feeding fence 4 and, when it is desired to place fodder block 5 beyond reach of the cattle, slide 71 can be moved in the direction away from feeding fence 4, wherein the stop is carried along by the ratchet mechanisms and fodder block 5 thus moved away from feeding fence 4.

In the embodiment shown the hydraulic jack 75 of feeding device 70 must have a stroke corresponding with the stroke which the fodder slide 71 must perform. It is of course possible to use a jack with a smaller stroke and to bring about the desired larger displacement by means for instance of a pulley transmission. To drive the fodder slide 71 the drive means only have to move in opposing directions the two portions of cables 78, 79 extending along fodder slide 71. The cables can therefore also run round a winch drum with opposed windings.

## Claims

1. Feeding device (70) comprising, close to a feeding fence (4) with one or more openings for passage of the head of an animal, a positioning surface and a fodder slide (71) for compacted fodder blocks (5), cable drive means for displacing the fodder slide (71) toward and away from the feeding fence (4) comprising at least two cable parts engaging spaced apart positions of the slide (71) and extending transversely thereof, and control means for selectively switching on the drive means, said positioning surface being formed by a pathway along the feeding fence, forming an uninterrupted continuous surface, said cable parts (78, 79) of the cable drive means extending over this surface,
characterized in that fixed support points (72) for the cable of the drive means are mounted close to the feeding fence (4), said cable parts (78, 79) being engaged by a single moving device (75), capable of simultaneously driving said cable parts so as to displace the fodder slide while maintaining its orientation.

2. Feeding device as claimed in claim 1, wherein the fodder slide (71) is free of wheels and slides directly on the surface of the pathway.

3. Feeding device as claimed in claim 1 or 2, wherein the drive means comprise at least one hydraulic motor (75) having a stroke corresponding with the stroke the fodder slide (71) must perform.

4. Feeding device as claimed in any of the claims 1-3, wherein the hydraulic motor (75) is disposed substantially parallel to the feeding fence (4).

5. Feeding device as claimed in claim 4, wherein the hydraulic motor (75) is mounted on the fodder slide (71).

6. Feeding device as claimed in claim 4, wherein the hydraulic motor (75) is arranged fixedly on the positioning surface.

## Patentansprüche

1. Fütterungsvorrichtung (70) mit einer, in der Nähe eines Fütterungszaunes (4) mit einer oder mehreren Öffnungen zum Durchlaß eines Tierkopfes angeordneten, Positionierfläche und einem Futterschlitten (71) für gepreßte Futterblöcke (5), Seilantriebsmittel zum Verschieben des Futterschlittens zum Fütterungzaun (4) hin oder vom Fütterungszaun weg mit mindestens zwei Seilstücken, die voneinander beabstandete Positionen des Schlittens (71) umgreifen und sich quer dazu erstrecken, und einem Steuermittel zum selektiven Anschalten der Antriebsmittel, wobei die Positionierfläche von einem Pfad entlang des Fütterungszaunes ausgebildet wird, der eine gleichmäßig durchgehende Fläche bildet, wobei sich die Seilstücke (78, 79) des Seilantriebsmittels über diese Fläche erstrecken, dadurch gekennzeichnet, daß die Trägerfixpunkte (72) für das Seil der Antriebsmittel in der Nähe des Fütterungszaunes (4) angebracht sind, wobei die Seilstücke (78, 79) durch eine einzige Bewegungsvorrichtung (75) verbunden sind, welche die Seilstücke gleichzeitig antreiben kann, um den Futterschlitten zu verschieben, während er seine Orientierung beibehält.

2. Fütterungsvorrichtung nach Anspruch 1, wobei der Futterschlitten (71) keine Räder aufweist und direkt auf der Oberfläche des Pfades gleitet.

3. Fütterungsvorrichtung nach Anspruch 1 oder 2, wobei die Antriebsmittel wenigsten einen hydraulischen Motor (75) mit einem Hub umfassen, welcher dem vom Futterschlitten (71) aufzubringenden Hub entspricht.

4. Fütterungsvorrichtung nach einem der Ansprüche 1-3, wobei der hydraulische Motor (75) im wesentlichen parallel zum Fütterungszaun (4) angeordnet ist.

5. Fütterungsvorrichtung nach Anspruch 4, wobei der hydraulische Motor (75) am Futterschlitten montiert ist.

6. Fütterungsvorrichtung nach Anspruch 4, wobei der hydraulische Motor (75) an der Positionierfläche fixiert ist.

## Revendications

1. Dispositif d'affouragement (70) comportant, à proximité d'une barrière d'affouragement (4) munie d'une ou plusieurs ouvertures pour le passage de la tête d'un animal, une surface de positionnement et un coulisseau pour fourrage (71), pour des blocs de fourrage compactés (5), des moyens d'entraînement par câble pour déplacer le coulisseau pour fourrage (71) en le rapprochant et l'éloignant de la barrière d'affouragement (4) comportant au moins deux parties de câble coopérant au niveau de positions écartées du coulisseau (71) et s'étendant transversalement à celui-ci, et des moyens de commande pour activer de manière sélective les moyens d'entraînement, ladite surface de positionnement étant formée par un trajet situé le long de la barrière d'affouragement, en formant une surface continue ininterrompue, lesdites parties de câble (78, 79) des moyens d'entraînement par câble s'étendant sur cette surface, caractérisé en ce que des points de support fixe (72) pour le câble des moyens d'entraînement sont montés à proximité de la barrière d'affouragement (4), lesdites parties de câble (78, 79) étant en prise avec un seul dispositif de déplacement (75), capable d'entraîner simultanément lesdites parties de câble de manière à déplacer le coulisseau pour fourrage tout en maintenant son orientation.

2. Dispositif d'affouragement selon la revendication 1, dans lequel le coulisseau pour fourrage (71) es démuni de roue et coulisse directement sur la surface du trajet.

3. Dispositif d'affouragement selon la revendication 1 ou 2, dans lequel les moyens d'entraînement comportent au moins un moteur hydraulique (75) ayant un course correspondant à la course que le coulisseau pour fourrage (71) doit réaliser.

4. Dispositif d'affouragement selon l'une quelconque des revendications 1 à 3, dans lequel le moteur hydraulique (75) est disposé à peu près parallèlement à la barrière d'affouragement (4).

5. Dispositif d'affouragement selon la revendication 4, dans lequel le moteur hydraulique (75) est monté sur le coulisseau pour fourrage (71).

6. Dispositif d'affouragement selon la revendication 4, dans lequel le moteur hydraulique (75) est agencé de manière fixe sur la surface de positionnement.
